# EUROPEAN PATENT SPECIFICATION

(11) **EP 4 264 364 B1**
(45) Date of publication and mention of the grant of the patent: **08.10.2025**
(21) Application number: 21836521.1
(22) Date of filing: 14.12.2021
(51) Int. Cl.: G02F 1/1503, G02F 1/153, G02F 1/155

(54) **PROTECTIVE LAYERS FOR TRANSPARENT CONDUCTIVE OXIDE ELECTRODES IN ELECTROCHROMIC DEVICES**
SCHUTZSCHICHTEN FÜR TRANSPARENTE LEITFÄHIGE OXIDELEKTRODEN IN ELEKTROCHROMEN VORRICHTUNGEN
COUCHES PROTECTRICES POUR ÉLECTRODES D'OXYDE CONDUCTRICES TRANSPARENTES DANS DES DISPOSITIFS ÉLECTROCHIMIQUES

(30) Priority: 16.12.2020 EP 20306582
(43) Date of publication of application: 25.10.2023
(73) Proprietor: Essilor International, 94220 Charenton-Le-Pont (FR)
(72) Inventor: ARCHAMBEAU, Samuel, 94220 CHARENTON-LE-PONT (FR); BIVER, Claudine, 94220 CHARENTON-LE-PONT (FR); CANO, Jean-Paul, 94220 CHARENTON-LE-PONT (FR); ESCAICH, David, 94227 CHARENTON CEDEX (FR); HARRIBEY, Marion, 94220 CHARENTON LE PONT (FR); MECA, Marion, 94220 CHARENTON LE PONT (FR)
(74) Representative: Plasseraud IP
(86) International application number: PCT/EP2021/085637
(87) International publication number: WO 2022/129013

(56) References cited:
- US-A1- 2012 224 246
- US-B2- 7 884 994

## Description

The invention relates to electrochromic (EC) cells with improved optical properties. The invention also relates to optical articles comprising such EC cells, to a method of preparation of such EC cells and to the use of a protective layer comprising a conductive polymer in an EC cell, in order to avoid the formation of stains in the EC cell.

EC cells typically have a structure comprising a shell defining a chamber at least a portion of said shell is transparent, for example the shell can comprise sheets of organic or mineral glass. Typical EC cells structures also comprise at least two electrodes in contact with the inside of the chamber and connected to a power supply, moreover the EC cell comprises at least one oxidizing compound and at least one reducing compound that will respectively be reduced and oxidized when an electric field is applied between the electrodes of the cell. At least one of these oxidizing and reducing compounds is an electrochromic compound. An electrolyte consisting in charged species located inside the chamber ensures the ionic conduction between the electrodes. **In** some cases, the EC compound comprises charged species that can play the role of the electrolyte. The electrolyte can thus comprise or be an EC compound and/or other redox active species and/or other ions devoid of EC properties and of redox activity.

The EC compound is a material having electrochromic properties i.e. that changes color between its reduced and its oxidized state. It can be a mixture of different EC compounds. When an EC compound is reduced or oxidized, there needs to be another redox active compound that can give or accept the electrons that the EC compound respectively accepts or gives. This other redox active compound can itself be an EC compound.

With such an EC cell, it is possible to control the redox state and hence the color of the EC compounds comprised in the cell by applying an electric field between the electrodes. Combining several EC compounds in an EC cell can be useful to adjust the color of the cell when no electric field is applied between the electrodes (passive state) and when such an electric field is applied (active state).

Optical articles can include EC cells thus making it possible to modify on demand the color and the transmittance of the article. For example, ski goggles can comprise an EC cell that the user will render more or less dark depending on the light conditions. Augmented reality devices also make use of EC cells, where the EC cells help to improve the contrast and visibility of the images of virtual objects added by the device to the real environment.

In most cases it is preferred that EC cells have a higher transmittance in the passive state (typically, in the case of ski goggles transmissions of at least 65% are required in the passive state) and become darker in the active state. The EC compounds in EC cells are thus preferentially chosen to be colorless or weakly colored in the passive state. It is also often preferred that the combination of the EC compounds in the EC cell gives a neutral color to the EC cell, such as grey or brown, in particular in the active state of the EC cell.

The EC cells with which the present invention is concerned belong to a specific type of EC cells, namely EC cells comprising an electrochromic formulation. In EC cells comprising an EC formulation, at least part of the EC compounds in the EC cell is contained in a liquid or in a gel filling the space between the electrodes and ensuring the ionic conduction between the electrodes. This gel or liquid containing at least part of the EC compounds is called the EC formulation.

The EC formulation thus gives at least part of its EC properties to the EC cell. The EC formulation also ensures the ionic conduction between the electrodes, through the presence of an electrolyte within the EC formulation. The electrolyte consists in charged species that can comprise the EC material itself and/or other redox active species and/or other ions devoid of EC properties and of redox activity.

The EC cells comprising an EC formulation differ from layered-type EC cells, which are defined for example in Alesanco et al. (Materials 2018, 11, 414) as EC cells wherein the EC compounds are deposited as a solid layer on the electrodes of the EC cell. In layered-type EC cells, a component of the EC cell devoid of EC compounds and containing an electrolyte ensures the ionic conduction between the two electrodes.

The EC cells comprising an EC formulation comprise but are not limited to all-in-one-type EC cells, which are defined for example in Alesanco et al. (Materials 2018, 11, 414) as EC cells wherein the EC formulation comprises at least one oxidizing compound and at least one reducing compound that will respectively be reduced and oxidized when an electric field is applied between the electrodes of the cell. At least one of these oxidizing and reducing compounds is an EC compound.

Examples of EC cells comprising an EC formulation that are not all-in-one-type EC cells are EC cells where the EC formulation only comprises reducing compounds and is devoid of oxidizing compounds or where the EC formulation comprises oxidizing compounds and is devoid of reducing compounds. The other redox active component (oxidant or reducer depending on what is comprised in the EC formulation) is then located in a distinct compartment of the EC cell. For instance, it can be deposited as a solid layer on one of the electrodes comprised in the cell.

In most EC cells the electrodes are made of transparent conductive oxides (TCO). TCOs are transparent inorganic metal oxides with good electrical conductivities, such as indium tin oxide (ITO).

Unless otherwise specified, all EC cells discussed in the following are EC cells comprising an EC formulation.

In most EC cells comprising an EC formulation, an electrode made of TCO is in contact with the EC formulation. It has been found that optical defects, in the form of stains, are often observed in EC cells comprising electrodes made of TCO that are in contact with the EC formulation. The location of the stains depends on the method used for the incorporation of the EC formulation in the EC cell.

When the drop filling (DF) method is used to assemble EC cells comprising an EC formulation, stains are located at the initial points of contact between the drops of EC formulation and the TCO electrode on which the drops of EC formulation have been deposited.

When the backfilling (BF) method is used to fill a preassembled cell with an EC formulation, stains can be observed, if a pause happens during the filling process, at the location of the contact line between the EC formulation and the TCO electrode at the time of said pause. This is the case even when the backfilling process is performed under vacuum. In many cases and even in the absence of a pause during the filling process, stains can be observed in backfilled EC cells near the openings used for backfilling the EC formulation.

These defects can appear just after the device assembly or only after some ageing of the device. They increase in intensity when no special care is taken to avoid contact between the EC cell, the EC formulation and ambient air during the assembly of the EC cell. They can also be present, although generally with a lower intensity, when an inert atmosphere or vacuum is used to avoid the presence of ambient air.

It is the merit of the applicant to have found that adding a protective layer comprising a conductive polymer to prevent contacts between the TCO electrode and the EC formulation in the EC cell eliminates the optical defects described above.

Although conductive organic layers deposited on TCO layers in optoelectronic devices are already known, it is not known to include conductive organic layers for protective purposes in EC devices comprising an EC formulation.

For instance, PEDOT:PSS polymer coatings are known to be efficient Hole Transport Layers (HTL) on ITO coatings for organic solar cells or in OLED (see for instance Hu et al. J. Mater. Chem. A, 2018,6, 16583-16589). Very thin PEDOT:PSS layers are used in this case (10 to 20 nm). In these applications, the devices comprising the conductive polymer layers do not comprise an EC formulation.

Conductive polymer layers having EC properties deposited on TCO layers have also already been used in EC cells of the layered-type. In these cases also, the devices did not comprise EC formulations and the conductive polymer layers were included to confer EC properties to the device and not for a protective purpose. For instance, in document US2010189918A1 a PEDOT type conductive polymer layer was polymerized on an ITO electrode. The counter-electrode was covered with Prussian Blue, another EC compound. Both substrates were then laminated with a polymer electrolyte membrane comprising no EC compound.

### SUMMARY

One aspect of the present invention is related to an EC cell comprising:
- A chamber comprising an EC formulation,
- At least two electrodes that are part of the same electrochemical cell and that consist in conducting material deposited on the inner surface of the chamber,

Wherein at least one of the electrodes comprises a layer of a TCO and a layer comprising a conductive polymer, said layer comprising a conductive polymer being the only part of the at least one electrode that is in contact with the EC formulation.

Another aspect of the present invention is related to an EC device comprising the EC cell of the invention.

Another aspect of the present invention is related to a method for the preparation of an EC cell of the invention comprising:
i. A step of deposition of the layer comprising a conductive polymer on at least one electrode comprising a layer of a transparent conductive oxide to obtain the at least one electrode comprising a layer of a transparent conductive oxide and a layer comprising a conductive polymer;
ii. A subsequent step of incorporation of the EC formulation in the EC cell, in such a way that the only part of the at least one electrode comprising a layer of a TCO and a layer comprising a conductive polymer that is in contact with the EC formulation is the layer comprising a conductive polymer.

Another aspect of the present invention is related to the use of a layer comprising a conductive polymer in an EC cell, in order to avoid the formation of stains related to the contact between a layer of TCO and an EC formulation, in particular during the incorporation of the EC formulation in the EC cell.

### FIGURES

FIG. 1 is a picture of an EC cell comprising ITO electrodes without a protective layer comprising a conductive polymer: a stain (the roughly circular spot indicated by the four arrows on the picture) is visible in the active state. It is located at the place where a drop of EC formulation was deposited on the ITO electrode.
FIG. 2 is a picture of an EC cell comprising ITO electrodes coated with a PEDOT:PSS protective layer. Represented is the area where a drop of EC formulation was deposited on the ITO electrode. No stain is visible in the active state.

### DETAILED DESCRIPTION OF THE INVENTION

A transparent object is an object allowing clear vision across said object, i.e. the object enables an observer positioned on one side of the object to clearly see another object or a scene located at some distance and on the other side of the object. In other words, the object does not cause sufficient scattering or diffraction of the light transmitted across the object to blur the vision of the observer. As defined herein, transparent objects can be colored and even relatively dark.

As defined herein, a transparent EC cell is transparent regardless of the electrical status of the system. EC devices such as ski goggles comprise transparent EC cells. EC devices such as mirrors or displays will not necessarily comprise transparent EC cells but at least a portion of the shell of the EC cell will be transparent.

In some embodiments, at least a portion of the shell defining the chamber of the EC cell of the invention is transparent. This can be the case for instance when the EC cell is used in a mirror or in a display.

In some embodiments, the EC cell of the invention is a transparent EC cells (i.e. clear vision is allowed across said EC cell).

The EC cell according to the invention comprises:
- A chamber comprising an EC formulation,
- At least two electrodes that are part of the same electrochemical cell and that consist in conducting material deposited on the inner surface of the chamber,

Wherein at least one of the electrodes comprises a layer of a TCO and a layer comprising a conductive polymer, said layer comprising a conductive polymer being the only part of the at least one electrode that is in contact with the EC formulation.

The Applicant observed the formation of stains resulting from the contact between a TCO electrode and an EC formulation. While the exact mechanism for the formation of said stains is at the moment unknown, the applicant unexpectedly found that when a layer comprising a conductive polymer is inserted between the TCO layer and the EC formulation said stains were no longer observed and EC cells without optical defects were obtained.

The layer inserted between the TCO layer and the EC formulation comprises a polymer having conductive properties in order to ensure conduction in the EC cell.

The EC cells of the invention are not particularly limited to a specific structure or a specific geometry for the chamber filled with the EC formulation. An example of structure for an EC cell of the invention can be given by EC cells, wherein the shell defining the chamber comprise two walls comprising at least one main face each and a sealing gasket. Said walls face each other through their at least one main face and at least one of the walls is transparent. The two main faces thus facing each other and a peripheral sealing gasket between said two main faces define the chamber and isolate said chamber comprising the EC formulation from the outside atmosphere. At least two electrodes are located on one or both of said main faces inside the chamber.

In the present invention, the inside of the chamber comprising the EC formulation is preferably isolated from the outside atmosphere.

Although the EC cells of the invention are not particularly limited to a specific structure or a specific geometry for the electrodes, the electrodes can be relatively thin layers of conductive material covering large portions (generally more than 30%) of the inner surface of the chamber. When the EC cell is of the structure described above comprising two walls facing each other, the electrodes can be on the same main face or on opposite main faces.

If one or several electrodes are deposited on a portion of the chamber that needs to be transparent for the planned use of the EC cell, these electrodes can comprise transparent conducting material, such as a TCO, thin continuous metal layers, metal nanogrids or metal nanomeshes.

As defined herein, nanogrids and nanomeshes are interconnected networks of nanowires. Nanomeshes and nanogrids can be obtained by methods known in the art. Nanogrids are obtained from a full metallic layer, which is then structured as a grid by using, for example, photolithographic methods. Nanomeshes are obtained through the deposition of a layer of a suspension of nanowires in a solvent and subsequent solvent removal, e.g. by drying.

As defined herein, a nanowire is a nanostructure with ratio of the length to width of at least 10 and a width ranging from 1 nm to 50 µm, preferably from 5 nm to 5 µm.

Thin continuous metal layers preferably have a thickness below 100 nm, more preferably below 50 nm. Metal nanomeshes and metal nanogrids preferably have thicknesses below 5 µm, preferably below 2 µm. The thickness of metal layers, metal nanomeshes and metal nanogrids comprised in electrodes that are deposited on a portion of the chamber that needs to be transparent can be chosen by the person skilled in the art to allow sufficient transparency and/or transmittance for the planned use of the EC cell.

The EC cells of the invention can comprise more than two electrodes.

In the EC cells of the invention, all the electrodes deposited on the inner surface of the chamber that comprise a layer of a TCO can comprise a layer comprising a conductive polymer, said layer comprising a conductive polymer being the only part of the electrode comprising a TCO layer that is in contact with the EC formulation.

In the EC cells of the invention, each electrode deposited on the inner surface of the chamber can comprise a layer of a TCO and a layer comprising a conductive polymer, said layer comprising a conductive polymer being the only part of the electrode that is in contact with the EC formulation.

Said layer comprising a conductive polymer may be deposited directly on top of the TCO layer.

It is to be understood that a layer deposited directly on top of another means that there exists a common area to both layers where both layers are in direct contact with each other.

Said TCO layer may be deposited on a metal layer, preferably said metal is chosen from Cu, Ag, Au, more preferably said metal layer is itself deposited on a second TCO layer or on an index of refraction matching layer, even more preferably, said metal layer comprises metal nanoparticles. Said metal nanoparticles preferably comprise metal nanowires, said metal nanowires preferably form an interconnected network.

Including a metal layer in an electrode comprising a TCO layer can be used to tune the conductivity of said electrode. Metals such as Ag are known to be able to react with some oxidizing compounds comprised in EC formulations. It is thus preferred that the metal layers comprised in the electrodes are not in contact with the EC formulation, inserting a TCO layer between the EC formulation and the metal layer can be used to avoid such contacts.

TCO that can be used in EC cells of the invention are generally doped metal oxides with a formula comprising oxygen atoms and at least two other elements in various proportions. TCO that can be used in EC cells of the invention can be non-limitatively chosen from antimony-doped tin oxide, aluminum-doped tin oxide, aluminum- and tin-doped zinc oxide (ATZO), aluminum-doped zinc oxide (AZO), fluorine-doped tin oxide (FTO), gallium-doped zinc oxide (GZO), indium tin oxide (ITO), indium tin zinc oxide (ITZO), indium zinc oxide (IZO), and mixtures thereof. **In** the above, the formulae in parentheses only indicate the main elements present in the formula of the TCO, they do not give the actual stoichiometry of these elements in the TCO. For example, ATZO is zinc oxide co-doped with aluminum and tin.

The thickness of the layer comprising a conductive polymer is chosen by the one skilled in the art. The preferable thickness may depend on the composition of the layer, in particular on the conductive polymer comprised in the layer and/or on the mode of deposition of the layer. When the thickness is too low, the protective effect against the formation of the stains can be weaker. Some conductive polymers are colored and/or have EC properties. When the layer comprising such conductive polymer is sufficiently thick, the color of the EC cell will depend not only on the EC compounds comprised in the EC formulation but also on the color and/or EC properties of said conductive polymer. Conductive polymers have conductivities that can be relatively low. Conductivities of conductive polymers are generally lower than the conductivities of TCO. Some conductive polymers absorb visible light. When the thickness of a layer comprising a conductive polymer absorbing visible light is too high, the color of the layer comprising a conductive polymer can confer unwanted colors to the EC cell.

In EC cells of the invention, the thickness of the layer comprising a conductive polymer is preferably comprised between 20 nm and 300 nm, more preferably between 40 nm and 250 nm, even more preferably between 60 nm and 150 nm.

The layer comprising a conductive polymer may comprise nanoparticles chosen from metal nanoparticles, metal oxide nanoparticles, Carbone nanotubes, graphene nanosheets, graphene oxide nanosheets, and mixtures thereof, preferably said metal oxide nanoparticles are chosen from ITO nanoparticles, SnO₂ nanoparticles, ZnO nanoparticles, AZO nanoparticles, WO₃ nanoparticles, and mixtures thereof.

Said nanoparticles comprised in the layer comprising a conductive polymer layer may comprise nanowires, preferably said nanowires form an interconnected network.

The properties of the layer comprising a conductive polymer, e.g. the conductivity of said layer or the EC properties of said layer, can be fine-tuned by the addition of the nanoparticles cited above in said layer.

In the EC cells of the invention, the conductive polymer may be chosen from PEDOT:PSS, PEDOT, other polythiophenes, polyanilines, polypyrroles, polyacetylenes, and mixtures thereof.

In the EC cells of the invention, the EC formulation may comprise an electrochromic oxidizing compound, preferably said EC oxidizing compound is chosen from viologens, derivatives of anthraquinone, derivatives of benzazoles, derivatives of imidazo[1,2-α]pyridines, derivatives of 2,1,3-benzothiadiazoles, derivatives of imidazoles, derivatives of benzoselenadiazoles, derivatives of benzoselenazoles, and mixtures thereof.

More preferably said EC oxidizing compound is a viologen chosen from mono viologens, bis viologens, and mixtures thereof, even more preferably the viologen is chosen from alkylviologens, arylviologens, arylalkylviologens, alkylarylviologens, or mixtures thereof, most preferably, the viologen is chosen from compounds of formula (I), compounds of formula (II), and mixtures thereof.

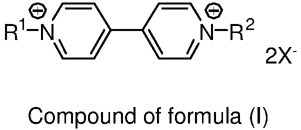

With R¹ and R² independently selected from:

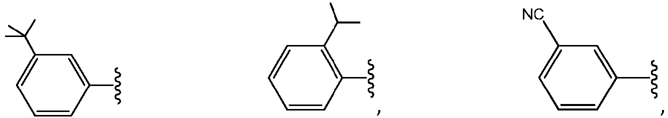

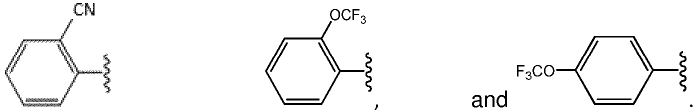

And X⁻ is a counterion, for example, X⁻ can be selected from halides, tetrafluoroborate, tetraphenylborate, hexafluorophosphate, nitrate, methanesulfonate, trifluoromethane sulfonate, toluene sulfonate, hexachloroantimonate, bis(trifluoromethanesulfonyl)imide, perchlorate, acetate, sulfate, and mixtures thereof. 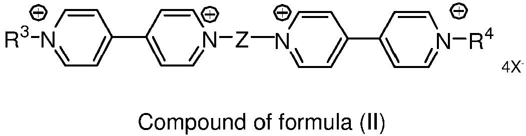
wherein Z is -CH₂-, -(CH₂)₂-, -(CH₂)₃-, -(CH₂)₄-, -(CH₂)₅-, -CH₂-CH(CH₃)-CH₂-, -CH₂-CH(CH₂Phenyl)-CH₂-, -(CH₂)₂-CH(CH₃)-CH₂-, -(CH₂)₃-CH(CH₃)-CH₂-, -(CH₂)₂-, and CH(CH₃)-(CH₂)₂-,
and R³ and R⁴ are selected from alkyl and optionally substituted phenyl groups, preferably substituted phenyl groups independently selected from: 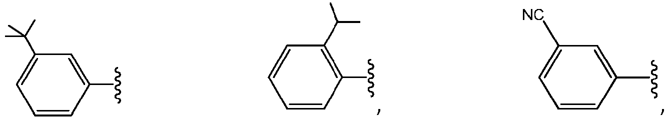 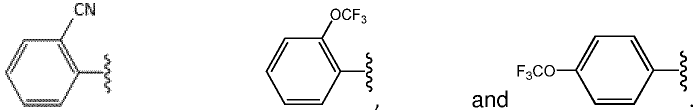
And X⁻ is a counterion, for example X⁻ can be selected from halides, tetrafluoroborate, tetraphenylborate, hexafluorophosphate, nitrate, methanesulfonate, trifluoromethane sulfonate, toluene sulfonate, hexachloroantimonate, bis(trifluoromethanesulfonyl)imide, perchlorate, acetate, sulfate, and mixtures thereof.

In the EC cells of the invention, the EC formulation may comprise an electrochromic reducing compound, preferably said EC reducing compound is chosen from derivatives of ferrocene, derivatives of phenoxazine, derivatives of phenazine, derivatives of phenothiazine, derivatives of thioanthrene, derivatives of tetrathiafulvalene, and mixtures thereof.

The EC devices of the invention comprise EC cells of the invention. They can be chosen, for example, from optical lenses, optical filters, attenuators, shutters, optical switches, window glazings, mirrors, display elements, and display devices.

Non-limiting examples of optical lenses include corrective and non-corrective lenses, including single vision or multi-vision lenses (i.e afocal, unifocal, bifocal, trifocal and progressive lenses), which may be either segmented or non-segmented, as well as other elements used to correct, protect, or enhance vision, including without limitation contact lenses, intra-ocular lenses, lenses for augmented reality devices or virtual reality devices, protective lenses (such as sun glasses or sun lenses), goggles (such as goggles for skiing, cycling and motor biking) and visors (such as helmet visors).

Non-limiting examples of display elements and devices include screens and monitors.

Non-limiting examples of window glazings include automotive, marine and aircraft windows.

Non-limiting examples of mirrors are side-view mirrors, rear-view mirrors and other vehicle mirrors.

The EC device of the invention can be an ophthalmic lens, a visor, or a pair of goggles.

The EC device of the invention can be a rearview mirror for a vehicle comprising an EC mirror of the invention.

The EC device of the invention can be part of an augmented reality or virtual reality device, including, for example, goggles, visors (such as helmet visors), mirrors, or displays (such as head-mounted displays).

The method for the preparation of an EC cell of the invention comprises:
i. A step of deposition of a layer comprising a conductive polymer on at least one electrode comprising a layer of a TCO to obtain at least one electrode comprising a layer of a TCO and a layer comprising a conductive polymer;
ii. A subsequent step of incorporation of an EC formulation in the EC cell, in such a way that the only part of the at least one electrode comprising a layer of a TCO and a layer comprising a conductive polymer that is in contact with the EC formulation is the layer comprising a conductive polymer.

TCO layers themselves can be obtained on a variety of substrates comprising organic or mineral glass, for example polymer films, for example by vacuum deposition techniques. Substrates bearing TCO layers are also commercially available, for example from Eastman or Sheldahl. For example, OC50 by Eastman is a PET film bearing a layer of TCO.

In the method for the preparation of the EC cells of the invention, the layer comprising a conductive polymer may be obtained in step i. by direct deposition of said conductive polymer in a solvent on the TCO layer, or by polymerization on the TCO layer of a composition comprising conductive monomers, preferably a composition comprising thiophene monomers, more preferably a composition comprising PEDOT monomers.

For example, said polymerization on the TCO layer can be an electropolymerisation, a chemical oxidative polymerization, a UV polymerization, or a thermal polymerisation of a composition comprising conductive monomers, preferably composition comprising thiophene monomers, more preferably a composition comprising PEDOT monomers.

As defined herein a conductive monomer is a monomer such that the polymer resulting from its polymerization is a conductive polymer. As defined herein a thiophene monomer is a monomer comprising a thiophene ring that can be polymerized through creating links at the 2- and 5-positions of the thiophene ring. In the thus obtained polymer, the thiophene rings can bear substituents at their 3- and 4- positions.

According to the invention, the conductive polymer in a solvent used in direct deposition on the TCO layer includes dispersions or solutions of polymers. They preferably have a concentration of between 0.01% and 10% by weight of polymer relative to the weight of the solution or the dispersion, more preferably between 0.1% and 4% by weight of polymer relative to the weight of the solution or the dispersion, even more preferably between 0.1% and 2% by weight of polymer relative to the weight of the solution or the dispersion. The solvent may comprise water or mixtures of water and a co-solvent, such as isopropyl alcohol (IPA), preferably the solvent comprises water and between 0.1% and 50% by weight of a co-solvent, such as IPA, relative to the total weight of solvent, more preferably between 1% and 30% by weight of a co-solvent, such as IPA, relative to the total weight of solvent, even more preferably between 1% and 15% by weight of a co-solvent, such as IPA, relative to the total weight of solvent.

A co-solvent may be added, for example, in order to improve the spreading of the conductive polymer in a solvent on the TCO layer. Advantageously said co-solvent evaporates from the layer comprising a conductive polymer when the layer comprising a conductive polymer formed by direct deposition of said conductive polymer in a solvent, dries.

According to the invention, direct deposition of the conductive polymer in a solvent can be performed by a variety of wet coating methods including but not limited to blade coating, slot die coating, spin coating, spray coating, inkjet coating, dip coating, screen printing, or roll-to-roll coating methods.

According to the invention, additives, including the co-solvent mentioned above, may be added to the conductive polymer in a solvent. For example, additives improving the spreading of the polymer in a solvent on the TCO layer and/or the wetting of the TCO layer by the polymer in a solvent and/or the conductivity of the layer comprising a conductive polymer obtained and/or the wetting of the layer comprising a conductive polymer obtained by the EC formulation. For example, such additives can be chosen from isopropyl alcohol, surfactants (such as non-ionic surfactants, ionic surfactants, alkylated surfactants, fluorinated surfactants, or bloc copolymers surfactants), polyethylene glycol (PEG), ethylene glycol oligomers, propylene glycol oligomers, ethylene glycol, DMSO, organic ionic liquids, and mixtures thereof.

According to the invention, the direct deposition of the conductive polymer in a solvent on the TCO layer may include a drying and/or curing step. Said drying and/or curing step helps removing the solvent and obtaining a good film formation. Said drying and/or curing step preferably is performed at temperatures of about 80°C to 150°C, preferably from 100°C to 130°C, for 1 minute to 1 hour. The exact time will be chosen by the one skilled in the art depending on the coating thickness, the type of solvents used, the type of substrate used, and the drying and/or curing conditions (batch or in line drying and/or curing for instance).

The layer comprising a conductive polymer may be obtained in step i. by direct deposition of a PEDOT:PSS in a solvent comprising water, followed by a drying and/or curing step, preferably said PEDOT:PSS in a solvent comprising water also comprises additives able to increase the conductivity and/or the wettability of a layer comprising PEDOT:PSS, more preferably said additives are chosen from isopropyl alcohol, surfactants (such as non-ionic surfactants, ionic surfactants, alkylated surfactants, fluorinated surfactants, or bloc copolymers surfactants), polyethylene glycol (PEG), ethylene glycol oligomers, propylene glycol oligomers, ethylene glycol, DMSO, organic ionic liquids, and mixtures thereof.

In a preferred embodiment, the PEDOT:PSS in a solvent comprising water comprises, relative to the total weight of said PEDOT:PSS in a solvent:
- Between 5% and 60% by weight of PEDOT:PSS in water, said PEDOT:PSS in water comprising between 0.1% and 10% by weight of PEDOT:PSS relative to the total weight of said PEDOT:PSS in water;
- Between 0% and 70% by weight of a 1.5 mg/L to 150 mg/L solution of PEG in water, preferably said PEG has a viscosity average molecular mass measured in water comprised between 50000 and 8000000 g/mol, more preferably between 800000 and 5000000 g/mol;
- Between 2% and 30% by weight of IPA;
- Between 0% and 20% by weight of tri ethylene glycol.
- Between 0% and 2% by weight of a surfactant.

In a more preferred embodiment, the PEDOT:PSS in a solvent comprising water comprises, relative to the total weight of said PEDOT:PSS in a solvent:
- Between 5% and 60% by weight of PEDOT:PSS in water, said PEDOT:PSS in water comprising 1% by weight of PEDOT:PSS relative to the total weight of said PEDOT:PSS in water;
- Between 0% and 70% by weight of a 15 mg/L solution of PEG in water, preferably said PEG has a viscosity average molecular mass measured in water comprised between 50000 and 8000000 g/mol, more preferably between 800000 and 5000000 g/mol;
- Between 2% and 30% by weight of IPA;
- Between 0% and 20% by weight of tri ethylene glycol.
- Between 0% and 2% by weight of a surfactant.

PEDOT:PSS in water is commercially available, for instance Orgacon^{™} S315 from AGFA or PH1000 from HERAEUS.

The method of preparation of the EC cell according to the invention may comprise a step of enhancement of the conductivity of the layer comprising a conductive polymer between step i and step ii, said step of enhancement of the conductivity of the layer comprising a conductive polymer comprising the soaking of the layer comprising a conductive polymer in a solution comprising a solute chosen from: ethylene glycol, ethylene glycol derivatives, DMSO, organic ionic liquids, acids, or mixtures thereof.

In the method of preparation of the EC cell according to the invention, the step of incorporation of an EC formulation in the EC cell (step ii.) may be performed using a BF method or using a DF method.

In the DF method, the EC formulation is deposited on at least a portion of the inner surface of the chamber and/or on at least a portion of the layer comprising a conductive polymer deposited on at least one electrode prior to the assembly and the eventual sealing of said chamber comprising the EC formulation. The EC formulation can be deposited in the form of one or more sessile drops. The shape of the drops can vary and depends on the shape of the EC device. For example, the sessile drops can have the shape of straight lines or curved lines. The assembly of the chamber can further modify the shape of the EC formulation deposited initially.

In the case of EC cells comprising two walls facing each other, the method of preparation of the EC cell using a DF method for the step of incorporation of an EC formulation in the EC cell (step ii) comprises:
depositing the EC formulation on at least a portion of a main face of a first wall and/or on at least a portion of the layer comprising a conductive polymer deposited on at least one electrode and placing a main face of a second wall on top of the EC formulation. The sealing gasket can be added before or after depositing the EC formulation. It can be deposited before or after the main face of the second wall of the cell has been placed on top of the EC formulation.

Generally, the DF method is performed, through methods known in the art, so that no bubbles are enclosed in the chamber of the EC cell when it is finished. This can imply the use vacuum techniques so that the EC formulation is conveniently degassed.

In the BF method, the chamber of the EC cell is assembled before being filled with the EC formulation. After this first assembly step, one or more openings are left that are used for the injection of the EC formulation in the chamber and generally sealed afterwards. A variety of techniques known in the art are used in order to avoid leaving bubbles in the chamber of the EC cell after the openings have been sealed. These techniques include for instance the use of vacuum during the injection of the EC formulation in the EC chamber.

One way to ensure that the only part of the at least one electrode comprising a layer of a TCO and a layer comprising a conductive polymer that is in contact with the EC formulation is the layer comprising a conductive polymer is to ensure that the entire area of said electrode that is in contact with the EC formulation once the EC cell is completed is covered with the layer comprising a conductive polymer through the deposition of said layer in step i.

In the method of preparation of the EC cell according to the invention, step ii. may be performed at least partly in ambient air.

Another aspect of the present invention is related to the use of a layer comprising a conductive polymer in an EC cell, in order to avoid the formation of stains related to the contact between a layer of TCO and an EC formulation.

In particular, another aspect of the present invention is related to the use of a layer comprising a conductive polymer in an EC cell, in order to avoid the formation of stains related to the contact between a layer of TCO and an EC formulation during the incorporation of the EC formulation in the EC cell.

All the characteristics described previously in connection with the EC cell of the invention and its method of preparation also apply to the EC cells in which a layer comprising a conductive polymer is used in order to avoid the formation of stains related to the contact between layers of TCO and an EC formulation during the incorporation of the EC formulation in the EC cell and their method of preparation.

### EXAMPLES

Several EC cells using PET ITO films coated, or not, with a PEDOT:PSS layer as the electrodes were prepared. An EC formulation containing a solvent, EC compounds and a polymer was used to illustrate the interest of the protective layer comprising a conductive polymer (here the PEDOT:PSS layer).

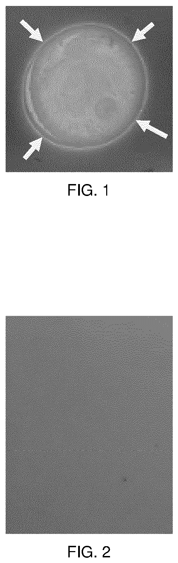

The assembly of the cells was made using the DF method. Several drops of the EC formulation were applied on the surface of one electrode. Once the assembly is completed, the EC cell is activated. Figures 1 and 2, which have already been described, illustrate the interest of using the protective layer comprising a conductive polymer.

Without the PEDOT:PSS layer (Figure 1), several stains appear where the drops of EC formulation were initially deposited on the electrode. This EC cell cannot be used. While with the PEDOT:PSS layer (Figure 2), no stains are visible in the EC cell. The second EC cell is fully operational and behaves well during ageing test. No defect appears after several activation cycles.

## Claims

1. An electrochromic cell comprising:
- a chamber comprising an electrochromic formulation,
- at least two electrodes that consist of conducting material deposited on the inner surface of the chamber,
**characterized in that** at least one of the electrodes comprises a layer of a transparent conductive oxide and a layer comprising a conductive polymer, said layer comprising a conductive polymer being the only part of the at least one electrode that is in contact with the electrochromic formulation.

2. The electrochromic cell as claimed in claim 1, wherein each electrode deposited on the inner surface of the chamber comprises a layer of a transparent conductive oxide and a layer comprising a conductive polymer, said layer comprising a conductive polymer being the only part of the electrode that is in contact with the electrochromic formulation.

3. The electrochromic cell as claimed in claim 1 or 2, wherein the layer comprising a conductive polymer is deposited directly on top of the transparent conductive oxide layer.

4. The electrochromic cell as claimed in claim 3, wherein the transparent conductive oxide is deposited on a metal layer, preferably wherein said metal is chosen from Cu, Ag, Au, more preferably wherein said metal layer is itself deposited on a second transparent conductive oxide layer or on an index of refraction matching layer.

5. The electrochromic cell as claimed in claim 4, wherein said metal layer comprises metal nanoparticles, preferably wherein said metal nanoparticles comprise metal nanowires, more preferably wherein said metal nanowires form an interconnected network.

6. The electrochromic cell as claimed in any one of claims 1 to 5, wherein the transparent conductive oxide is chosen from antimony-doped tin oxide, aluminum-doped tin oxide, aluminum- and tin-doped zinc oxide, aluminum-doped zinc oxide, fluorine-doped tin oxide, gallium-doped zinc oxide, indium tin oxide, indium tin zinc oxide, indium zinc oxide, and mixtures thereof.

7. The electrochromic cell as claimed in any one of claims 1 to 6, wherein the thickness of the layer comprising a conductive polymer is comprised between 20nm and 300nm, preferably between 40nm and 250nm, even more preferably between 60nm and 150nm.

8. The electrochromic cell as claimed in anyone of claims 1 to 7, wherein the layer comprising a conductive polymer comprises nanoparticles chosen from metal nanoparticles, metal oxide nanoparticles, Carbone nanotubes, graphene nanosheets, graphene oxide nanosheets, and mixtures thereof, preferably wherein said metal oxide nanoparticles are chosen from indium tin oxide nanoparticles, SnO₂ nanoparticles, ZnO nanoparticles, aluminum-doped zinc oxide nanoparticles, WO₃ nanoparticles, and mixtures thereof.

9. The electrochromic cell as claimed in anyone of claims 1 to 8, wherein the conductive polymer is chosen from PEDOT:PSS, PEDOT, other polythiophenes, polyanilines, polypyrroles, polyacetylenes, and mixtures thereof.

10. The electrochromic cell as claimed in anyone of claims 1 to 9, wherein the electrochromic formulation comprises an electrochromic reducing compound, preferably wherein said electrochromic reducing compound is chosen from derivatives of ferrocene, derivatives of phenoxazine, derivatives of phenazine, derivatives of phenothiazine, derivatives of thioanthrene, derivatives of tetrathiafulvalene, and mixtures thereof.

11. A method for the preparation of an electrochromic cell as claimed in claim 1 to 10 comprising:
a step i of deposition of a layer comprising a conductive polymer on at least one electrode comprising a layer of a transparent conductive oxide to obtain at least one electrode comprising a layer of a transparent conductive oxide and a layer comprising a conductive polymer;
a subsequent step ii of incorporation of an electrochromic formulation in the electrochromic cell, in such a way that the only part of the at least one electrode comprising a layer of a transparent conductive oxide and a layer comprising a conductive polymer that is in contact with the electrochromic formulation is the layer comprising a conductive polymer.

12. A method as claimed in claim 11, wherein the layer comprising a conductive polymer is obtained in step i by direct deposition of said conductive polymer in a solvent on the transparent conductive oxide layer, or by polymerization on the transparent conductive oxide layer of a composition comprising conductive monomers, preferably a composition comprising thiophene monomers, more preferably a composition comprising PEDOT monomers.

13. A method as claimed in claim 12, wherein the layer comprising a conductive polymer is obtained in step i by direct deposition of a PEDOT:PSS in a solvent comprising water, followed by a drying and/or curing step, preferably said PEDOT:PSS in a solvent comprising water also comprises additives able to increase the conductivity and/or the wettability of a layer comprising PEDOT:PSS, more preferably said additives are chosen from isopropyl alcohol, surfactants, polyethylene glycol, ethylene glycol oligomers, propylene glycol oligomers, ethylene glycol, DMSO, organic ionic liquids, and mixtures thereof.

14. A method as claimed in any one of claims 11 to 13, comprising a step of enhancement of the conductivity of the layer comprising a conductive polymer between step i and step ii, preferably said step of enhancement of the conductivity of the layer comprising a conductive polymer comprises the soaking of the layer comprising a conductive polymer in a solution comprising a solute chosen from ethylene glycol, ethylene glycol derivatives, DMSO, organic ionic liquids, acids, or mixtures thereof.

15. The use of a layer comprising a conductive polymer in an electrochromic cell as claimed in any one of claims 1 to 10, in order to avoid the formation of stains related to the contact between a layer of transparent conductive oxide and an electrochromic formulation.

## Patentansprüche

1. Elektrochrome Zelle umfassend:
- eine Kammer, die eine elektrochrome Formulierung umfasst,
- wenigstens zwei Elektroden, die aus leitfähigem Material bestehen, das auf der inneren Oberfläche der Kammer abgeschieden ist,
**dadurch gekennzeichnet, dass** wenigstens eine der Elektroden eine Schicht aus einem transparenten leitfähigen Oxid und eine Schicht umfassend ein leitfähiges Polymer umfasst, wobei die Schicht, die ein leitfähiges Polymer umfasst, der einzige Teil der wenigstens einen Elektrode ist, der in Kontakt mit der elektrochromen Formulierung vorliegt.

2. Elektrochrome Zelle nach Anspruch 1, wobei jede Elektrode, die auf der inneren Oberfläche der Kammer abgeschieden ist, eine Schicht aus einem transparenten leitfähigen Oxid und eine Schicht umfassend ein leitfähiges Polymer umfasst, wobei die Schicht, die ein leitfähiges Polymer umfasst, der einzige Teil der Elektrode ist, der in Kontakt mit der elektrochromen Formulierung vorliegt.

3. Elektrochrome Zelle nach Anspruch 1 oder 2, wobei die Schicht, die ein leitfähiges Polymer umfasst, direkt auf der transparenten leitfähigen Oxidschicht abgeschieden ist.

4. Elektrochrome Zelle nach Anspruch 3, wobei das transparente leitfähige Oxid auf einer Metallschicht abgeschieden ist, wobei das Metall vorzugsweise ausgewählt ist aus Cu, Ag, Au, wobei die Metallschicht selbst bevorzugter auf einer zweiten transparenten leitfähigen Oxidschicht oder auf einer Brechungsindexanpassungsschicht abgeschieden ist.

5. Elektrochrome Zelle nach Anspruch 4, wobei die Metallschicht Metallnanopartikel umfasst, wobei die Metallnanopartikel vorzugsweise Metallnanodrähte umfassen, wobei die Metallnanodrähte bevorzugter ein miteinander verbundenes Netzwerk bilden.

6. Elektrochrome Zelle nach einem der Ansprüche 1 bis 5, wobei das transparente leitfähige Oxid ausgewählt ist aus antimondotiertem Zinnoxid, aluminiumdotiertem Zinnoxid, aluminium- und zinndotiertem Zinkoxid, aluminiumdotiertem Zinkoxid, fluordotiertem Zinnoxid, galliumdotiertem Zinkoxid, Indiumzinnoxid, Indium-Zinn-Zinkoxid, Indiumzinkoxid und Gemischen davon.

7. Elektrochrome Zelle nach einem der Ansprüche 1 bis 6, wobei die Dicke der Schicht, die ein leitfähiges Polymer umfasst, in dem Bereich zwischen 20 nm und 300 nm, vorzugsweise zwischen 40 nm und 250 nm, noch bevorzugter zwischen 60 nm und 150 nm, liegt.

8. Elektrochrome Zelle nach einem der Ansprüche 1 bis 7, wobei die Schicht, die ein leitfähiges Polymer umfasst, Nanopartikel ausgewählt aus Metallnanopartikeln, Metalloxidnanopartikeln, Kohlenstoffnanoröhrchen, Graphen-Nanofolien, Graphenoxid-Nanofolien, und Gemischen davon umfasst, wobei die Metalloxid-Nanopartikel vorzugsweise ausgewählt sind aus Indiumzinnoxid-Nanopartikeln, SnO₂-Nanopartikeln, ZnO-Nanopartikeln, aluminiumdotierten Zinkoxid-Nanopartikeln, WO₃-Nanopartikeln und Gemischen davon.

9. Elektrochrome Zelle nach einem der Ansprüche 1 bis 8, wobei das leitfähige Polymer ausgewählt ist aus PEDOT:PSS, PEDOT, anderen Polythiophenen, Polyanilinen, Polypyrrolen, Polyacetylenen und Gemischen davon.

10. Elektrochrome Zelle nach einem der Ansprüche 1 bis 9, wobei die elektrochrome Formulierung eine elektrochrome reduzierende Verbindung umfasst, wobei die elektrochrome reduzierende Verbindung vorzugsweise ausgewählt ist aus Derivaten von Ferrocen, Derivaten von Phenoxazin, Derivaten von Phenazin, Derivaten von Phenothiazin, Derivaten von Thioanthren, Derivaten von Tetrathiafulvalen und Gemischen davon.

11. Verfahren zur Herstellung einer elektrochromen Zelle nach Anspruch 1 bis 10, umfassend:
einen Schritt i des Abscheidens einer Schicht, die ein leitfähiges Polymer umfasst, auf wenigstens eine Elektrode, die eine Schicht aus einem transparenten leitfähigen Oxid umfasst, um wenigstens eine Elektrode, die eine Schicht aus einem transparenten leitfähigen Oxid und eine Schicht umfassend ein leitfähiges Polymer umfasst, zu erhalten;
einen nachfolgenden Schritt ii des derartigen Einverleibens einer elektrochromen Formulierung in die elektrochrome Zelle, dass der einzige Teil der wenigstens einen Elektrode, die eine Schicht aus einem transparenten leitfähigen Oxid und eine Schicht umfassend ein leitfähiges Polymer umfasst, der mit der elektrochromen Formulierung in Kontakt steht, die Schicht, die ein leitfähiges Polymer umfasst, ist.

12. Verfahren nach Anspruch 11, wobei die Schicht, die ein leitfähiges Polymer umfasst, bei Schritt i durch direkte Abscheidung des leitfähigen Polymers in einem Lösungsmittel auf die transparente leitfähige Oxidschicht oder durch Polymerisation einer Zusammensetzung, die leitfähige Monomere umfasst, vorzugsweise einer Zusammensetzung, die Thiophenmonomere umfasst, besonders bevorzugt einer Zusammensetzung, die PEDOT-Monomere umfasst, auf der transparenten leitfähigen Oxidschicht erhalten wird.

13. Verfahren nach Anspruch 12, wobei die Schicht, die ein leitfähiges Polymer umfasst, bei Schritt i durch direkte Abscheidung eines PEDOT:PSS in einem Lösungsmittel, das Wasser umfasst, gefolgt von einem Trocknungs- und/oder Härtungsschritt erhalten wird, wobei vorzugsweise das PEDOT:PSS in einem Lösungsmittel, das Wasser umfasst, ferner Additive umfasst, die fähig sind, die Leitfähigkeit und/oder die Benetzbarkeit einer Schicht, die PEDOT:PSS umfasst, zu erhöhen, wobei die Additive bevorzugter ausgewählt sind aus Isopropylalkohol, Tensiden, Polyethylenglycol, Ethylenglycololigomeren, Propylenglycololigomeren, Ethylenglycol, DMSO, organischen ionischen Flüssigkeiten und Gemischen davon.

14. Verfahren nach einem der Ansprüche 11 bis 13, umfassend einen Schritt des Erhöhens der Leitfähigkeit der Schicht, die ein leitfähiges Polymer umfasst, zwischen Schritt i und Schritt ii, wobei vorzugsweise der Schritt des Erhöhens der Leitfähigkeit der Schicht, die ein leitfähiges Polymer umfasst, Tränken der Schicht, die ein leitfähiges Polymer umfasst, in einer Lösung umfassend einen gelösten Stoff ausgewählt aus Ethylenglycol, Ethylenglycolderivaten, DMSO, organischen ionischen Flüssigkeiten, Säuren und Gemischen davon umfasst.

15. Verwendung einer Schicht, die ein leitfähiges Polymer umfasst, in einer elektrochromen Zelle nach einem der Ansprüche 1 bis 10, um die Entstehung von Flecken, die mit dem Kontakt zwischen einer Schicht aus transparentem leitfähigem Oxid und einer elektrochromen Formulierung verbunden sind, zu vermeiden.

## Revendications

1. Cellule électrochrome comprenant :
- une chambre comprenant une formulation électrochrome,
- au moins deux électrodes qui consistent en un matériau conducteur déposé sur la surface interne de la chambre,
**caractérisée en ce qu'**au moins une des électrodes comprend une couche d'un oxyde conducteur transparent et une couche comprenant un polymère conducteur, ladite couche comprenant un polymère conducteur étant la seule partie de l'au moins une électrode qui est en contact avec la formulation électrochrome.

2. Cellule électrochrome selon la revendication 1, dans laquelle chaque électrode déposée sur la surface interne de la chambre comprend une couche d'un oxyde conducteur transparent et une couche comprenant un polymère conducteur, ladite couche comprenant un polymère conducteur étant la seule partie de l'électrode qui est en contact avec la formulation électrochrome.

3. Cellule électrochrome selon la revendication 1 ou 2, dans laquelle la couche comprenant un polymère conducteur est déposée directement au-dessus de la couche d'oxyde conducteur transparent.

4. Cellule électrochrome selon la revendication 3, dans laquelle l'oxyde conducteur transparent est déposé sur une couche métallique, de préférence dans laquelle ledit métal est choisi parmi Cu, Ag, Au, mieux encore dans laquelle ladite couche métallique est elle-même déposée sur une deuxième couche d'oxyde conducteur transparent ou sur une couche d'adaptation d'indice de réfraction.

5. Cellule électrochrome selon la revendication 4, dans laquelle ladite couche métallique comprend des nanoparticules métalliques, de préférence dans laquelle lesdites nanoparticules métalliques comprennent des nanofils métalliques, mieux encore dans laquelle lesdits nanofils métalliques forment un réseau interconnecté.

6. Cellule électrochrome selon l'une quelconque des revendications 1 à 5, dans laquelle l'oxyde conducteur transparent est choisi parmi l'oxyde d'étain dopé à l'antimoine, l'oxyde d'étain dopé à l'aluminium, l'oxyde de zinc dopé à l'aluminium et à l'étain, l'oxyde de zinc dopé à l'aluminium, l'oxyde d'étain dopé au fluor, l'oxyde de zinc dopé au gallium, l'oxyde d'indium et d'étain, l'oxyde d'indium-étain-zinc, l'oxyde d'indium et de zinc, et les mélanges de ceux-ci.

7. Cellule électrochrome selon l'une quelconque des revendications 1 à 6, dans laquelle l'épaisseur de la couche comprenant un polymère conducteur est comprise entre 20 nm et 300 nm, de préférence entre 40 nm et 250 nm, mieux encore entre 60 nm et 150 nm.

8. Cellule électrochrome selon l'une quelconque des revendications 1 à 7, dans laquelle la couche comprenant un polymère conducteur comprend des nanoparticules choisies parmi les nanoparticules métalliques, les nanoparticules d'oxyde métallique, les nanotubes de carbone, les nanofeuilles de graphène, les nanofeuilles d'oxyde de graphène et les mélanges de ceux-ci, de préférence dans laquelle lesdites nanoparticules d'oxyde métallique sont choisies parmi les nanoparticules d'oxyde d'indium et d'étain, les nanoparticules de SnO₂, les nanoparticules de ZnO, les nanoparticules d'oxyde de zinc dopé à l'aluminium, les nanoparticules de WO₃ et les mélanges de celles-ci.

9. Cellule électrochrome selon l'une quelconque des revendications 1 à 8, dans laquelle le polymère conducteur est choisi parmi le PEDOT:PSS, le PEDOT, les autres polythiophènes, les polyanilines, les polypyrroles, les polyacétylènes, et les mélanges de ceux-ci.

10. Cellule électrochrome selon l'une quelconque des revendications 1 à 9, dans laquelle la formulation électrochrome comprend un composé réducteur électrochrome, de préférence dans laquelle ledit composé réducteur électrochrome est choisi parmi les dérivés de ferrocène, les dérivés de phénoxazine, les dérivés de phénazine, les dérivés de phénothiazine, les dérivés de thioanthrène, les dérivés de tétrathiafulvalène, et les mélanges de ceux-ci.

11. Procédé de préparation d'une cellule électrochrome selon les revendications 1 à 10, comprenant :
une étape i de dépôt d'une couche comprenant un polymère conducteur sur au moins une électrode comprenant une couche d'un oxyde conducteur transparent pour obtenir au moins une électrode comprenant une couche d'un oxyde conducteur transparent et une couche comprenant un polymère conducteur ;
une étape ultérieure ii d'incorporation d'une formulation électrochrome dans la cellule électrochrome, de manière à ce que la seule partie de l'au moins une électrode comprenant une couche d'oxyde conducteur transparent et une couche comprenant un polymère conducteur qui est en contact avec la formulation électrochrome soit la couche comprenant un polymère conducteur.

12. Procédé selon la revendication 11, dans lequel la couche comprenant un polymère conducteur est obtenue à l'étape i par dépôt direct dudit polymère conducteur dans un solvant sur la couche d'oxyde conducteur transparent, ou par polymérisation, sur la couche d'oxyde conducteur transparent, d'une composition comprenant des monomères conducteurs, de préférence d'une composition comprenant des monomères de thiophène, mieux encore d'une composition comprenant des monomères de PEDOT.

13. Procédé selon la revendication 12, dans lequel la couche comprenant un polymère conducteur est obtenue à l'étape i par dépôt direct d'un PEDOT:PSS dans un solvant comprenant de l'eau, suivi d'une étape de séchage et/ou de durcissement, de préférence ledit PEDOT:PSS dans un solvant comprenant de l'eau comprend également des additifs pouvant augmenter la conductivité et/ou la mouillabilité d'une couche comprenant du PEDOT:PSS, mieux encore lesdits additifs sont choisis parmi l'alcool isopropylique, les tensioactifs, le polyéthylène glycol, les oligomères d'éthylène glycol, les oligomères de propylène glycol, l'éthylène glycol, le DMSO, les liquides ioniques organiques, et les mélanges de ceux-ci.

14. Procédé selon l'une quelconque des revendications 11 à 13, comprenant une étape d'amélioration de la conductivité de la couche comprenant un polymère conducteur entre l'étape i et l'étape ii, de préférence ladite étape d'amélioration de la conductivité de la couche comprenant un polymère conducteur comprend le trempage de la couche comprenant un polymère conducteur dans une solution comprenant un soluté choisi parmi l'éthylène glycol, les dérivés d'éthylène glycol, le DMSO, les liquides ioniques organiques, les acides, et les mélanges de ceux-ci.

15. Utilisation d'une couche comprenant un polymère conducteur dans une cellule électrochrome selon l'une quelconque des revendications 1 à 10 en vue d'éviter la formation de taches liées au contact entre une couche d'oxyde conducteur transparent et une formulation électrochrome.
